Europäisches Patentamt

European Patent Office

Office européen des brevets

(11) Publication number: **0 161 695**
A2

# EUROPEAN PATENT APPLICATION

(21) Application number: 85200440.7

(22) Date of filing: 18.03.82

(51) Int. Cl.⁴: **B 60 C 27/06,** B 60 C 27/08

(30) Priority: 23.03.81 US 246362
23.03.81 US 246363

(43) Date of publication of application: 21.11.85
Bulletin 85/47

(84) Designated Contracting States: **AT BE CH DE FR GB IT
LI LU NL SE**

(60) Publication number of the earlier application in
accordance with Art. 76 EPC: 0061306

(71) Applicant: BURNS BROS., INC., 621 S.E. Union Avenue,
Portland Oregon 97214 (US)

(72) Inventor: Coutts, James Walker, 7 Platt Street, Swanton
Vermont 05488 (US)
Inventor: Martinelli, Rene Joseph, 1905 Hill House Drive,
West Linn Oregon 97068 (US)

(74) Representative: Johnson, Terence Leslie et al, Edward
Evans & Co. Chancery House 53-64 Chancery Lane,
London WC2A 1SD (GB)

(54) A cross-member for a cable-type tire chain.

(57) A cross-member (18) for a cable-type tire chain com-
prising a cable (26) covered over at least part of its length
with a sheath (30, 31, 32) comprising a wire wound helically
around the cable (26), the sheath being free to rotate on the
cable, there being traction means (20) also freely rotatably
mounted on the cross-member (18).

1

# A CROSS-MEMBER FOR A CABLE-TYPE TIRE CHAIN

The invention relates to cable-type chains for use on vehicle tires, for improving traction, for example, in ice or snow conditions. In particular, the invention is concerned with cable-type chains which include a pair of elongate flexible side members adapted to extend circumferentially around opposite side walls of a tire, and cross members provided with traction means such as traction sleeves, the cross members being connected between the side members so as to extend over and across the tire tread. Chains of this general type are well known; see, for example, U.S. Patent No. 4,155,389.

It is desirable in the design of cable-type tire chains, to maximize traction, vehicle stability and chain life, consistent with minimizing wear both of the tire and of the chain itself. The present invention is directed, inter alia, toward aspects of cable-type tire chain design adapted to provide the tire chain with favorable characteristics in the above or other respects.

For example, it may be desirable to provide attachment means between the ends of the cross members and the respective side members which are simple and economical to manufacture and apply, and which provide a relatively low profile connection between the cross members and side members, which is useful, for example, in vehicle wheel wells having limited clearance. It is further desirable, for such attachment means to provide a secure connection while facilitating cross member replacement, and preferably the attachment means should allow for a degree of movement (hinging movement being preferred), as between the cross member ends and the side members, in order to accommodate changes in tire profile and/or limited circumferential movement of the cross member. The present invention is directed, inter alia, towards providing a cable-type tire chain having attachment means adapted to fulfil the above criteria.

According to the invention there is provided a cross member for a cable-type tire chain, the cross member being provided with traction means and having at its opposite ends attachment means for connecting the cross member to respective side members of the cable chain, characterized in that the cross member comprises a cable covered over at least a part of its length with a sheath comprising a wire wound helically around the cable, with the sheath being free to rotate on the cable and in that the traction means comprises traction sleeves freely rotatable on the cross member.

Preferably the cross member construction is such as to provide elongate sheaths at least at opposite end portions of the cross member, with traction sleeves freely rotatably mounted on the end portions over the wire sheaths.

Additional features and advantages of the invention will be apparent from the ensuing description and claims taken in conjunction with the accompanying drawings.

## Brief Description of the Drawings

Figure 1 is a perspective view of a vehicle tire equipped with a tire chain and cross-member therefor constructed in accordance with the invention;

Figure 2 is an enlarged sectional view on line 2-2 of Figure 1;

Figure 3 is an exploded perspective view of parts of the tire chain shown in Figure 1, including a cross member and a connector element;

Figure 4 is a perspective view of a vehicle tire equipped with a second form of tire chain and cross-member therefor constructed in accordance with the invention;

Figure 5 is an enlarged sectional view on line 5-5 of Figure 5; and

Figure 6 is an exploded perspective view of parts of the tire chain shown in Figure 4, including a cross-member and connector elements.

Description of Preferred Embodiments

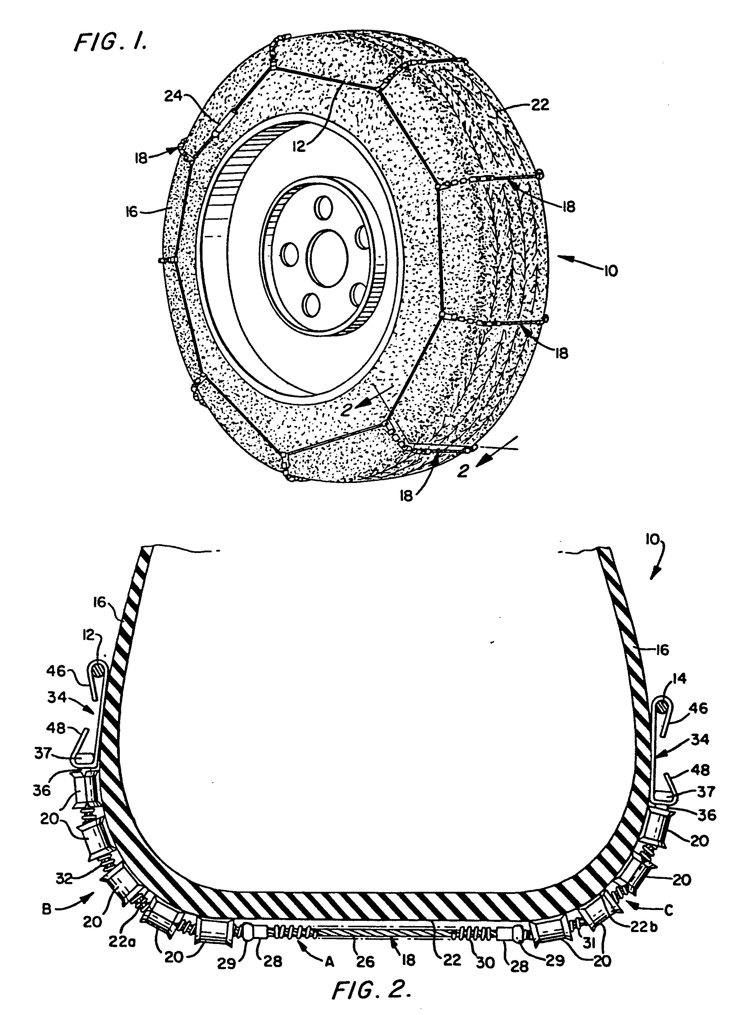

As shown in Figures 1 and 2, a vehicle tire 10 is provided with a first form of cable-type tire chain comprising elongate flexible side members 12 and 14 (only one side member 12 is visible in Figure 1), which extend circumferentially around opposite side walls 16 of the tire, and cross members 18, carrying traction means in the form of traction sleeves 20, the cross members being connected between the side members and extending over and across the tire tread 22. The opposite ends of the respective side members 12 and 14 may be connected together, in known manner, by any suitable connector 24 (Figure 1), so that the cable chain securely embraces the tire. Side members 12 and 14 may, for example, comprise stranded metal cable or other suitable elongate flexible material.

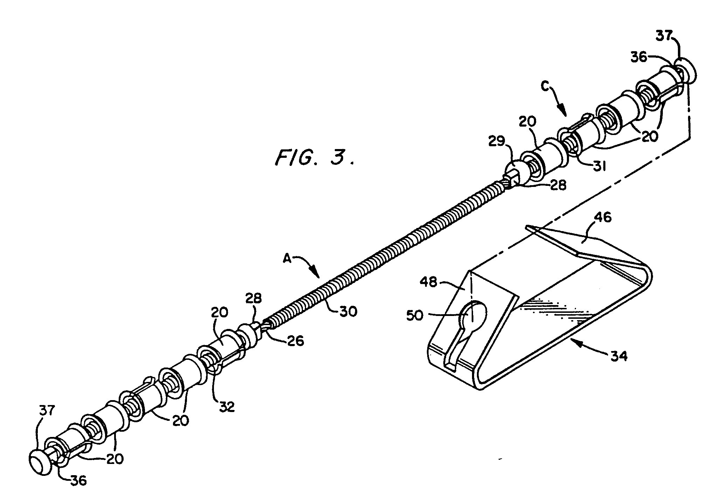

Each of the cross members 18, see particularly Figures 2 and 3, comprises a length of cable 26 (such as stranded-metal aircraft cable) divided, by bushings 28 crimped to the cable, into a central section A and outer sections B and C. A wire is helically wound around central section A so as to provide an elongate sheath 30 extending substantially the entire length of the central section. The diameter of the sheath is such that it can rotate freely on the cable 26. Outer sections B and C are likewise provided with freely rotatably helically wound elongate wire sheaths 32 and 31. Each end of the cross member has a connector element in the form of a further crimped-on bushing 36 with a part-spherical head 37. Each of the cable sections B and C carries a number of the traction sleeves 20, over the respective sheaths 32 and 34, the diameter of the sleeves 20 and the number of sleeves being such that they are freely rotatable.

It will be noted that the lengths of sections A, B and C of the cross members are such that when the tire chain is fitted to a tire, the traction sleeves are located in the vicinity of the tread shoulders 22a and 22b, with the center of the tire tread being free of sleeves. This is preferred, but not essential, and, the sleeves could be continued across the entire tread. (In this case, bushings 28 could be omitted and a single wire sheath could be used for the entire length of each cross member.) Further, while in the illustrated embodiment, there are unequal numbers of traction sleeves on the respective end portions of the cross member, the actual number of sleeves used in practice may be varied to suit different applications.

The ends of the cross members 18 are connected to the side members 12 and 14 by attachment means including the bushings 36 and complementary connector elements 34 shown particularly in Figures 2 and 3. Each connector element 34 is formed from a flat metal plate having one end 46 bent to form a tab by which the element 34 is crimped firmly to the relevant side member. The other end of the element 34 is bent to form a further tab 48 having a keyhole-like opening 50, adapted to receive, through its large end, the head 37 of one of the end bushings 36 of the cross member when tab 48 is lifted away from the body of the element. The bushing 36 can then be moved down opening 50 toward the end of element 34. When tab 48 is then flattened toward the body of the plate, head 37 becomes trapped in element 34 as shown in Figure 2, the narrow part of opening 50 being of insufficient width to permit withdrawal of head 37, and the flattening of tab 48 preventing head 37 from moving toward the large end of opening 50. The connector configuration, however, due, inter alia, to the part-spherical head 37, permits rotation of the cross member about its longitudinal axis. The cross member can be released by bending tab 48 to the position of Figure 3 (with the aid of a tool) and removing head 37 through the large end of opening 50.

The ability of the cross member cables 26 to rotate relative to the connector elements 34, along with the free rotational mounting of the wire sheaths 30-32 and of the traction sleeves, contributes significantly to reducing or at least equalizing wear on the cable chain. Additionally, the specific design of the traction sleeves imparts good lateral traction to a tire, while resisting clogging by ice chips or the like. Further, the connector elements provide a rather low-profile connection between the cross members and the side members which is useful in vehicle wheel wells having limited clearance, and the connections may also permit a degree of lateral hinging as between the side members and the ends of the cross members useful in accommodating changes in tire profile.

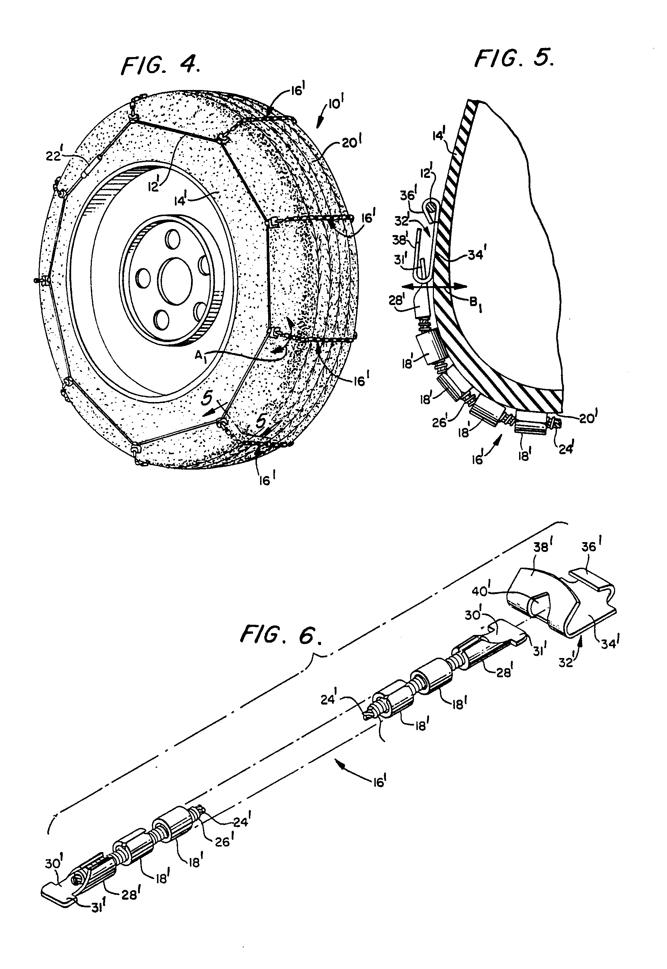

Referring now to Figures 4 and 5, a vehicle tire 10' is provided with a second form of cable-type tire chain comprising flexible elongate side members 12', which again extend circumferentially around opposite side walls 14' of the tire and cross members 16', carrying traction means in the form of traction sleeves 18', the cross members being connected between the side members and extending over and across the tire tread 20'. Only one side member 12' is visible in the drawings, but it will be appreciated that a like side member is provided on the opposite side wall of the tire. The ends of the respective side members 12' may be connected together in known manner by any suitable connector 22' (Figure 4) so that the cable chain securely embraces the tire. The side members 12' may again comprise stranded metal cable or other suitable elongate flexible material.

Each of the cross members 16', see particularly Figures 5 and 6, comprises a length of cable 24', such as stranded metal aircraft cable, covered by a sheath of wire 26' wound helically around cable 24'. The traction sleeves 18' are freely rotatably mounted over the wire sheath 26'.

The opposite ends of each cross member are each provided with a connector element in the form of a metal bushing 28' crimped onto cable 24' and having a head in the form of a substantially flat, T-shaped plate 30'. The heads 30' form part of attachment means

- 8 -

for connecting the ends of the cross members to the respective side members, the attachment means, in each case, further including a complementary connector element 32'.

Connector elements 32' may each comprise a metal plate 34', having a bent-over tab 36' at one end, by which the element may be firmly crimped to one of the side cables, and a further bent-over tab 38' at the other end, tab 38' being formed with an elongate opening 40' extending lengthwise of the element and being tapered at one end as shown. The shape and configuration of opening 40' is such that when the tab 38' is lifted away from plate 34' (as in Figure 6 ), one of the heads 30' may be inserted through the opening by longitudinally orienting the crossbar 31' of the head 30' with the length of the opening. Then, when tab 38' is flattened toward the body of plate 34' (as in Figure 5 ), head 30' becomes trapped between the tab and the body of the plate, since the flattened tab prevents the crossbar 31' from being oriented into longitudinal alignment with the opening. In the flattened condition of tab 38', however, the relative configuration of the head, the opening, and the tab and plate body, is such that a degree of hinging may take place between the connector elements both in the plane of plate 34' and perpendicularly to the plane of plate 34'. These movements provide for a degree of hinging of the cross cable relative to the side cables circumferentially of a tire (as indicated, for example, by arrow $A_1$ in Figure 4) and laterally of the tire (as indicated, for example, by arrow $B_1$ in Figure 5 ). The circumferential hinging accommodates adjustment of the cross members circumferentially of the tire, while the lateral hinging accommodates changes in the tire profile.

**0 161 695**

The cross members may be removed from connector elements 32', if required, simply by lifting the tabs 38' by means of a tool, and suitably orienting the crossbars 31' relative to openings 40'.

It will be seen from the foregoing that the invention, at least in one aspect thereof, provides attachment means between the cross members and side members of a cable-type tire chain, which attachment means is relatively simple and economical to manufacture, which provides relatively low profile connection between the cross members and side members, and which may allow for movement such as hinging movement of a cross member relative to a side member both laterally and circumferentially of a tire. Further, the attachment means provide secure connections between the cross members and side members while allowing for simple disconnection therebetween for cross member replacement.

While only preferred embodiments of the invention have been described herein in detail, the invention is not limited thereby and modifications can be made within the scope of the attached claims.

The tire chain itself referred to herein is described an claimed in European Patent Application No. 82301392.5 to which cross-reference is made.

CLAIMS

1.    A cross member for a cable-type tire chain, the cross member being provided with traction means and having at its opposite ends attachment means for connecting the cross member to respective side members of the cable chain, characterised in that the cross member comprises a cable (26) covered over at least a part of its length with a sheath (30 or 31 or 32) comprising a wire wound helically around the cable, with the sheath being free to rotate on the cable and in that the traction means comprises traction sleeves (20) freely rotatable on the cross member (18).

2.    A cross member according to Claim 1, characterized in that cable (26) is a stranded metal cable.

3.    A cross member according to Claim 2, characterized in that the cable (26) has end portions each covered with a sheath (31 or 32) as specified, traction sleeves (20) freely rotatable on said sheaths, and a central portion free of traction sleeves.

4.    A cross member according to Claim 3, characterized in that the central portion is also covered with a sheath (30).

5.    A cross member according to Claim 3, characterized in that said portions of the cable are separated by bushings (28) fixed on the cable (26), said bushings each having a head (29) with a curved outer surface providing a bearing surface for one of the traction sleeves (20).

FIG. 1.

FIG. 2.

0 161 695

FIG. 3.

FIG. 4.

FIG. 5.

FIG. 6.